# EUROPEAN PATENT SPECIFICATION

(11) **EP 4 517 896 B1**
(45) Date of publication and mention of the grant of the patent: **17.12.2025**
(21) Application number: 24197042.5
(22) Date of filing: 28.08.2024
(51) Int. Cl.: H01M 10/04

(54) **RECHARGEABLE BATTERY**
WIEDERAUFLADBARE BATTERIE
BATTERIE RECHARGEABLE

(30) Priority: 28.08.2023 KR 20230113032
(43) Date of publication of application: 05.03.2025
(73) Proprietor: SAMSUNG SDI CO., LTD., Giheung-gu Yongin-si, Gyeonggi-do 17084 (KR)
(72) Inventor: KIM, Kyungho, 17084 Yongin-si (KR); PARK, Kyeong-yun, 17084 Yongin-si (KR); LEE, Eunsong, 17804 Yongin-si (KR); KANG, Minseung, 17084 Yongin-si (KR); JO, Myeongjun, 17084 Yongin-si (KR)
(74) Representative: Marks & Clerk LLP

(56) References cited:
- EP-A1- 3 255 705
- EP-A1- 3 716 384
- EP-B1- 2 365 562
- CN-A- 102 629 678
- CN-A- 103 119 754
- CN-A- 107 645 010

## Description

### FIELD

The present disclosure relates to a rechargeable battery.

### BACKGROUND

Unlike a primary battery, a rechargeable battery is capable of being charged and discharged repeatedly. A low-capacity rechargeable battery that includes an electrode assembly packaged in a pack may be used as a power source for various small portable electronic devices such as cellular phones and camcorders. A high-capacity rechargeable battery that has dozens of connected electrode assemblies may be used as a power source for driving motors such as those used in an electric scooter, a hybrid automobile, and an electric automobile.

### SUMMARY

The present disclosure attempts to overcome the conventional issues described above, and to provide a rechargeable battery with improved durability.

A rechargeable battery according to the present disclosure includes an electrode assembly having a plurality of electrode plates each including an electrode base tab and disposed to be stacked on one another, a separator interposed between at least some of the plurality of electrode plates, and a case accommodating the electrode assembly, wherein a width of the electrode base tab of an outermost electrode plate in the electrode assembly is smaller than a width of an electrode base tab of remaining electrode plates connected to one another.

The plurality of electrode plates may include a plurality of first electrode plates, each first electrode plate including a first electrode base tab, and a plurality of second electrode plates, each second electrode plate including a second electrode base tab.

The first electrode base tabs may be aligned to overlap one another, and the second electrode base tabs may be aligned to overlap one another.

The first electrode plate may be positioned on upper and lower outermost sides of the electrode assembly.

The second electrode plate may be positioned on upper and lower outermost sides of the electrode assembly.

The first electrode plate may be positioned on the upper outermost side of the electrode assembly, and the second electrode plate may be positioned on the lower outermost side of the electrode assembly.

The second electrode plate may be positioned on the upper outermost side of the electrode assembly, and the first electrode plate may be positioned on the lower outermost side of the electrode assembly.

The electrode base tab of the outermost electrode plate in the electrode assembly may be positioned in an inner region of the electrode base tabs of the remaining electrode plates which are connected to one another.

A difference D between one end (based on a width direction) of the electrode base tab of the outermost electrode plate (e.g. one end in a width direction of the electrode base tab of an outermost electrode plate) in the electrode assembly and one end (based on the width direction) of the electrode base tab of the remaining electrode plates (e.g. one end in a width direction of an electrode base tab of remaining electrode plates) may be within a range of 0.5 mm to 2.0 mm.

A width H1 of the electrode base tab of the outermost electrode plate of the electrode assembly may be within a range of 7.5 mm to 8.5 mm.

A width H2 of the electrode base tabs of the remaining electrode plates, excluding the electrode base tab of the outermost electrode plate of the electrode assembly, may be within a range of 8.5 mm to 9.5 mm.

A boundary between the electrode base tab and an electrode current collector may be rounded in the outermost electrode plate among the plurality of electrode plates.

A radius R of the rounded portions of the electrode base tab and the electrode current collector may be within a range of 0.5 mm to 2.0 mm.

The first electrode plate may include a first electrode current collector onto which a first electrode active material is applied, the first electrode base tab may be formed integrally with the first electrode current collector and extend outwardly from a portion of the first electrode plate, the second electrode plate may include a second electrode current collector onto which a second electrode active material is applied, and the second electrode base tab may be formed integrally with the second electrode current collector and extend outwardly from a portion of the second electrode plate.

At least some of the above and other features of the invention are set out in the claims.

### BRIEF DESCRIPTION OF THE DRAWINGS

FIG. 1 is a perspective view illustrating an electrode assembly and a case separated in a rechargeable battery according to embodiments of the present disclosure.
FIG. 2 is an exploded perspective view illustrating the electrode assembly of FIG. 1.
FIG. 3 is a top plan view of the portion where a first electrode base tab is positioned in the electrode assembly of FIG. 1 as viewed from direction A.

### DETAILED DESCRIPTION OF THE EMBODIMENTS

Preferred embodiments are described herein to illustrate the concepts. However, these embodiments are only to facilitate understanding by those skilled in the art of the present disclosure. The concepts may be embodied in many different forms and should not be construed as being limited to the embodiments set forth herein.

In addition, in the accompanying drawings, sizes or thicknesses of various components may be exaggerated for brevity and clarity. Like numbers refer to like elements throughout. As used herein, the term "and/or" includes any one and all combinations of one or more of the associated listed items. In addition, it will be understood that when an element A is referred to as being "connected to" an element B, the element A can be directly connected to the element B, or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well and conversely as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or a feature's relationship to another element(s) or feature(s) as illustrated in the figures. It will be understood that the spatially relative terms are intended to encompass different orientations of the device in use or operation, in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both orientations of above and below.

Hereinafter, a rechargeable battery according to embodiments of the present disclosure will be described in detail with reference to the drawings.

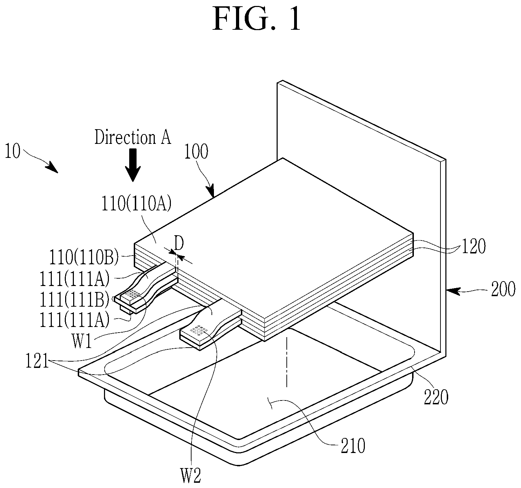

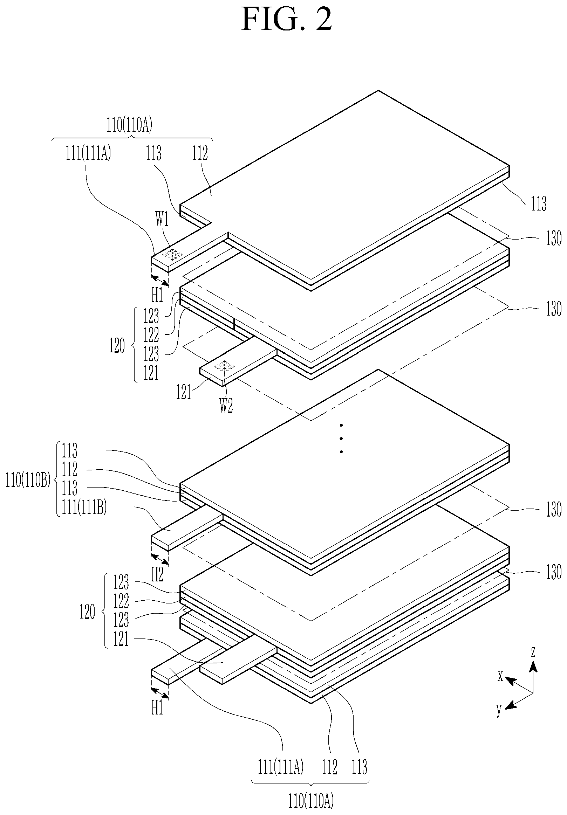

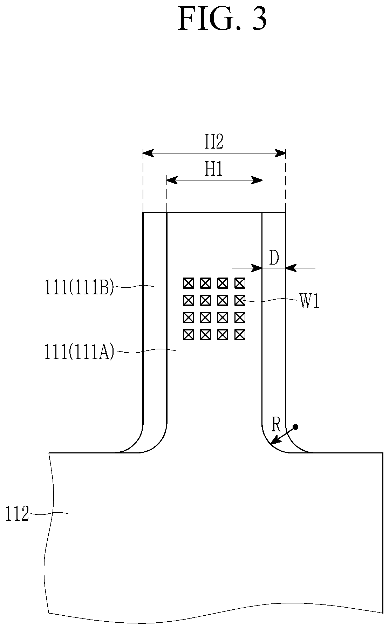

FIG. 1 is a perspective view illustrating an electrode assembly and a case separated in a rechargeable battery according to embodiments of the present disclosure, FIG. 2 is an exploded perspective view illustrating the electrode assembly of FIG. 1, and FIG. 3 is a top plan view of the portion where a first electrode base tab is positioned in the electrode assembly of FIG. 1 as viewed from direction A.

As shown in FIGS. 1 to 3, a rechargeable battery 10 according to embodiments of the present disclosure includes an electrode assembly 100 and a case 200.

The electrode assembly 100 includes a plurality of electrode plates 110 and 120 and a separator 130. Each of the electrode plates 110 and 120 include electrode base tabs 111 and 121, and are disposed to be stacked on one another.

The electrode assembly 100 may be in the form of a laminate including a first electrode plate 110, a second electrode plate 120, with the separator 130 being wound or stacked repeatedly. For example, the electrode assembly 100 may be of a repeatedly wound jelly-roll type. Alternatively, there may be a plurality of electrode assemblies 100, of a stacked type, disposed to be stacked in multiple layers. In the present disclosure, the electrode assembly 100 of the stacked type will be described as an example. In more detail, the electrode plates 110 and 120 may include the first electrode plate 110 and the second electrode plate 120.

The first electrode plate 110 may include a first electrode base tab 111. There may be a plurality of first electrode plates 110, and there also may be a plurality of first electrode base tabs 111. The plurality of first electrode base tabs 111 may be joined to one other, such as by welding. For example, the plurality of first electrode base tabs 111 may be assembled and joined together by welding, such as by any of laser welding, resistance welding, and ultrasonic welding.

The second electrode plate 120 may include a second electrode base tab 121. **If** the electrode assembly 100 is of a stacked type, the first electrode plate 110 and the second electrode plate 120 may be stacked alternately, and the second electrode plate 120 may include a plurality of second electrode plates. There may also be a plurality of the second electrode base tabs 121. Like the first electrode base tab 111, the plurality of second electrode base tabs 121 may be joined to one another, such as by using various methods of welding.

The above-described second electrode plate 120 may include a negative electrode, and the first electrode plate 110 may include a positive electrode, and vice versa. The first electrode plate 110 and the second electrode plate 120 may be electrically connected to an outside of the rechargeable battery 10 through a strip terminal (not shown).

Electrical connection between the first electrode base tab 111 and a strip terminal (not shown) may be made through a first welding portion W1. For example, the plurality of first electrode base tabs 111 may be tightly bound together and integrally coupled to a strip terminal (not shown) through the first welding portion W1. The first welding portion W1 may be formed by ultrasonic welding, using various welding methods.

With ultrasonic welding, for example, the first electrode base tab 111 and a strip terminal are disposed to overlap one another as welding base materials. Additionally, in this example, the first electrode base tab 111 and the strip terminal are pressurized between a horn (not shown) and an anvil (not shown) of the welding machine, so that joining may be achieved by vibration energy, such as frictional heat transmitted during high-frequency ultrasonic vibration.

With the first electrode base tab 111 being made of a low-resistance metal material, for example, if the electrical resistance welding that performs welding through resistance heat is used, sufficient resistance heat for fusion and coalescence of the base material may not be generated. Therefore, ultrasonic welding may be employed more preferably than electrical resistance welding.

In addition, an electrical connection between the second electrode base tab 121 and the strip terminal (not shown) may be made through a second welding portion W2, with the second welding portion W2 being similar in an embodiment to that of the first welding portion W1, described above.

Hereinafter, for better comprehension and ease of description, the first electrode plate 110 will be described herein as a positive electrode and the second electrode plate 120 as a negative electrode, but the concepts are not so limited.

The first electrode plate 110, as the positive electrode, may include a first electrode active material 113, such as a transition metal oxide, applied to the first electrode current collector 112, itself being formed of a metal foil such as aluminium or aluminium alloy. The first electrode base tab 111 may be formed integrally with the first electrode current collector 112 and may extend outwardly from a portion of the first electrode plate 110.

A method of manufacturing the first electrode plate 110 may, for example, include pressing the first electrode current collector 112 with a press, thereby generating the first electrode base tab 111in a certain desired shape, such as a rectangular shape.

Additionally, the first electrode base tab 111 may be positioned so as not to overlap with the second electrode base tab 121. For example, based on the direction shown in FIG. 1, the second electrode base tab 121 may be disposed on the right side, and the first electrode base tab 111 may be disposed on the left side. That is, a plurality of first electrode base tabs 111 may be disposed to be spaced apart from a plurality of second electrode base tabs 121.

When a plurality of first electrode base tabs 111 are disposed, the first electrode base tab 111 may be defined as a multi-tab arrangement. The first electrode base tab 111 may be a path for current flow between the first electrode current collector 112 and a strip terminal (not shown).

The second electrode plate 120, as a negative electrode, may be formed by applying a second electrode active material 123, such as graphite or carbon, to the second electrode current collector 122, itself formed of a metal foil such as copper, copper alloy, nickel or nickel alloy. The second electrode base tab 121 may extend outwardly from the second electrode current collector 122.

A method of manufacturing the second electrode plate 120, for example, may include pressing the second electrode current collector 122 with a press, thereby generating the second electrode base tab 121 in a desired shape, such as a rectangular shape.

The separator 130 may be interposed between the first electrode plate 110 and the second electrode plate 120. The separator 130 prevents shorting between the first electrode plate 110 and the second electrode plate 120, and enables movement of lithium ions. To this end, the separator 130 may be larger in size than that of the first electrode plate 110 and that of the second electrode plate 120. The material of the separator 130 may be, for example, polyethylene, polypropylene, or a composite film of polyethylene and polypropylene, but is not limited thereto.

Separator 130 may be cut into unit lengths and disposed between the first electrode plate 110 and the second electrode plate 120. Alternatively, a single separator 130 in a ribbon shape may be disposed between the first electrode plate 110 and the second electrode plate 120, creating a zigzag shape. Alternatively, separator 130 may be wound in one direction between the first electrode plate 110 and the second electrode plate 120. As such, the arrangement form of the separator 130 is not limited to a specific form.

Case 200 may accommodate the electrode assembly 100, together with the electrolyte solution. Case 200 may be one of a pouch type, a cylindrical type, and a square type.

Case 200 may be manufactured by bending plate-shaped exterior materials to face one another, pressing or drawing one side, and including a recess 210 on one side. The electrode assembly 100 may be accommodated in the recess 210. A sealing portion 220 may be formed on the outer periphery of the recess 210, and while the electrode assembly 100 is accommodated in the recess 210, the sealing portion 220 is sealed using a method such as thermal fusion.

The manufacturing process of the electrode assembly 100 described above may include a first stacking step and a second stacking step.

In the first stacking step, a full cathode, which includes the remainder of the first electrode plate 110, excluding the outermost first electrode plate 110A, and a full anode, which includes the second electrode plate 120, may be stacked.

In the second stacking step, a half cathode may be stacked on one or more of both outermost sides based on the stacking direction. The half cathode may include the outermost first electrode plate 110A among the first electrode plates 110. For convenience, FIG. 1 illustrates the electrode assembly 100 in which the half cathode is stacked on both the upper and lower outermost sides of the electrode assembly 100. However, it is also possible for the half cathode to be stacked only on the upper outermost electrode assembly 100, while the half anode is stacked on the lower outermost electrode assembly 100. Here, the full cathode and the full anode have the active material applied to both sides of the base, and the half cathode has the active material applied to only one side of the base, but the concepts are not so limited.

Hereinafter, the specific shape of the electrode assembly 100 in the rechargeable battery 10 having the above-described structure will be described in detail.

As shown in FIG. 3, a width H1 of the electrode base tab 111A of the outermost electrode plate 110A, in the electrode assembly 100 included in the rechargeable battery 10, according to embodiments of the present disclosure, is smaller than a width H2 of an electrode base tab 111B of the remaining electrode plates 110B, which are connected to one another.

As shown in FIG. 1, for example, the first electrode plate 110A may be positioned on upper and lower outermost sides of the electrode assembly 100. With this arrangement, there may be a total of 2n+1 (n = 1, 2, 3, ...) electrode plates 110 and 120, the first electrode plate 110 may include n+1 plates, and the second electrode plate 120 may include n plates. Accordingly, the first electrode plate 110 may be positioned on the upper and lower outermost sides of the electrode assembly 100.

Alternatively, it may be possible for the second electrode plate 120 to be positioned on the upper and lower outermost sides of the electrode assembly 100.

It also may be possible for the first electrode plate 110 to be positioned on the upper outermost side of the electrode assembly 100, and for the second electrode plate 120 to be positioned on the lower outermost side of the electrode assembly 100, although not shown. Conversely, it may be possible for the second electrode plate 120 to be positioned on the upper outermost side of the electrode assembly 100, and for the first electrode plate 120 to be positioned on the lower outermost side of the electrode assembly 100.

The first electrode plate 110 and the second electrode plate 120 may be stacked in equal numbers.

In the electrode assembly 100 as described above, the electrode base tab of the outermost electrode plate may be positioned in the inner region of the electrode base tabs of the remaining electrode plates, which plates are connected to one another. In more detail, in the case of a rechargeable battery 10 in which the first electrode plate 110 is positioned on the outermost side in the electrode assembly 100, the first electrode base tab 111A of the first electrode plate 110A, positioned on the outermost side among the plurality of first electrode plates 110, may be positioned in the inner region of the first electrode base tab 111B of the remaining first electrode plate 110B.

In addition, among the plurality of first electrode plates 110, both ends in the width direction of the first electrode base tab 111A of the outermost first electrode plate 110A may be positioned inside both ends of the first electrode base tab 111B of the remaining first electrode plates 110B. In other words, the first electrode base tab 111A of the first electrode plate 110A, positioned on the outermost side among the plurality of first electrode plates 110, may be disposed so as not to protrude outwardly from the first electrode base tab 111B of the remaining first electrode plates 110B. More specifically, a difference D between one end (based on the width direction) of the electrode base tab of the outermost electrode plate in the electrode assembly 100 and one end (based on the width direction) of the electrode base tab of the remaining electrode plates may be within a range of 0.5 mm to 2.0 mm.

If the first electrode plate 110 is positioned on the outermost side in the electrode assembly 100, a difference D between the one end of the first electrode base tab 111A of the outermost first electrode plate 110A and the one end of the first electrode base tab 111B of the remaining first electrode plates 110B, may be within a range of 0.5 mm to 2.0 mm, in the width direction.

Among the plurality of the first electrode plates 110, if a difference D between one end of the first electrode base tab 111A of the outermost first electrode plate 110A and one end of the first electrode base tab 111B of the remaining first electrode plate 110B, is less than 0.5 mm in the width direction, there is a possibility that stress will be concentrated at a boundary portion between the first electrode base tab 111A of the outermost first electrode plate 110A and the first electrode current collector 112.

**If** the difference D between one end of the first electrode base tab 111A of the outermost first electrode plate 110A among the plurality of first electrode plates 110 and one end of the first electrode base tab 111B of the remaining first electrode plate 110B exceeds 2.0 mm in the width direction, the width H1 of the first electrode base tab 111A of the outermost first electrode plate 110A among the plurality of first electrode plates 110 may be unduly small, causing an increase in resistance or difficulty establishing or maintaining an electrical connection with the rechargeable battery 10 externally through a strip terminal.

**If** a difference D between one end (in the width direction) of the electrode base tab of the outermost electrode plate positioned in the electrode assembly 100 and one end (in the width direction) of the electrode base tab of the remaining electrode plates, which plates are connected to one another is the same as described above, the width H1 of the electrode base tab 111A of the outermost electrode plate positioned in the electrode assembly 100 may be within a range of 7.5 mm to 8.5 mm.

The width H2 of the electrode base tab 111B of the remaining electrode plates, excluding the electrode base tab 111A of the electrode plate positioned on the outermost side in the electrode assembly 100, may be within a range of 8.5 mm to 9.5 mm.

The boundary portion between the electrode base tab 111A and the electrode current collector 112 in the outermost electrode plate, among the plurality of electrode plates, may be rounded. The radius R of the rounded portions of the electrode base tab 111A and the electrode current collector 112 may be within a range of 0.5 mm to 2.0 mm.

As described above, because the size of the base tab of the outermost electrode plate among the plurality of electrode plates 110 and 120 is sufficiently small, it is advantageous to position the electrode base tab 111A of the outermost electrode plate in the inner region of the remaining electrode plates 111B.

As described above, in the rechargeable battery 10 according to the present disclosure, the electrode base tab of the outermost electrode plate in the electrode assembly is made smaller in width than that of the electrode base tab of the remaining electrode plates, which are connected to one another. Therefore, if swelling occurs in the rechargeable battery 10, stress may be dispersed to the surrounding area without being concentrated at the boundary between the electrode base tab 111A of the outermost electrode plate and the electrode current collector.

Accordingly, the rechargeable battery according to the present disclosure may prevent sudden hard shorts from occurring due to a bent portion between the electrode base tab and the first electrode current collector caused by pressure due to swelling, resulting in intensifying stress.

In the rechargeable battery according to the present disclosure, the electrode base tab of the outermost electrode plate in the electrode assembly is made smaller in width than that of the electrode base tab of the remaining electrode plates which are connected to one another. Therefore, if swelling occurs in the rechargeable battery, stress may be dispersed to the surrounding area without being concentrated at the boundary between the electrode base tab of the outermost electrode plate and the electrode current collector.

Accordingly, the rechargeable battery according to the present disclosure may prevent sudden hard shorts from occurring due to the bent portion between the electrode base tab and the first electrode current collector being pressed by swelling, which causes the stress to intensify.

The rechargeable battery may be manufactured in various shapes, among which a pouch battery may include an electrode assembly including an insulating separator interposed between a positive electrode plate and a negative electrode plate, and a thin, flexible pouch in which the electrode assembly is embedded.

At this time, the pouch accommodates the electrode assembly in the inner space. A plurality of positive electrode tabs are coupled to the positive electrode plate of the electrode assembly, and a plurality of negative electrode tabs are coupled to the negative electrode plate.

Here, a plurality of positive electrode tabs are generally made of the same width and disposed side by side in the vertical direction, and a plurality of negative electrode tabs are also generally made in the same manner. Therefore, if swelling occurs in a rechargeable battery, there is an issue that fracture occurs as stress acts on the edge of the positive electrode tab and the base.

While this disclosure has been described in connection with what is presently considered to be practical embodiments, the drawings and the detailed description of the present disclosure which are described above are merely illustrative, are just used for the purpose of describing the present invention, and are not used for qualifying the meaning or limiting the scope of the present disclosure, which is disclosed in the appended claims. Therefore, it will be understood by those skilled in the art that various modifications and other equivalent embodiments may be made from the present disclosure. Accordingly, an actual technical protection scope of the present disclosure is to be defined by the claims.

**<Description of symbols>**

| | | | |
|---|---|---|---|
| 10: | Rechargeable battery | | |
| 100: | Electrode assembly | 110: | First electrode plate |
| 111: | First electrode base tab | 112: | First electrode current collector |
| 113: | First electrode active material | 120: | Second electrode plate |
| 121: | Second electrode base tab | 122: | Second electrode current collector |
| 123: | Second electrode active material | 130: | Separator |
| 200: | Case | | |

## Claims

1. A rechargeable battery, comprising:
an electrode assembly including a plurality of electrode plates, each electrode plate including an electrode base tab and disposed to be stacked on one another, and a separator interposed between the plurality of electrode plates; and
a case accommodating the electrode assembly,
wherein a width of the electrode base tab of an outermost electrode plate in the electrode assembly is smaller than a width of the electrode base tab of each of the remaining electrode plates which are connected to one another.

2. The rechargeable battery as claimed in claim 1, wherein
the plurality of electrode plates comprises:
a plurality of first electrode plates, each first electrode plate including a first electrode base tab; and
a plurality of second electrode plates, each second electrode plate including a second electrode base tab.

3. The rechargeable battery as claimed in claim 2, wherein
the first electrode base tabs are aligned to overlap one another,
and the second electrode base tabs are aligned to overlap one another.

4. The rechargeable battery as claimed in claim 2 or claim 3, wherein:
(i) a first electrode plate is positioned on upper and lower outermost sides of the electrode assembly;
(ii) a second electrode plate is positioned on upper and lower outermost sides of the electrode assembly;
(iii) a first electrode plate is positioned on an upper outermost side of the electrode assembly, and a second electrode plate is positioned on a lower outermost side of the electrode assembly; or
(iv) a second electrode plate is positioned on an upper outermost side of the electrode assembly, and a first electrode plate is positioned on a lower outermost side of the electrode assembly.

5. The rechargeable battery as claimed in any one of claims 1 to 4, wherein
an electrode base tab of an outermost electrode plate in the electrode assembly is positioned in an inner region of the electrode base tabs of remaining electrode plates.

6. The rechargeable battery as claimed in any one of claims 1 to 5, wherein
a difference D between one end in a width direction of the electrode base tab of an outermost electrode plate in the electrode assembly and one end in a width direction of an electrode base tab of remaining electrode plates is within a range of 0.5 mm to 2.0 mm.

7. The rechargeable battery as claimed in any one of claims 1 to 6, wherein
a width H1 of an electrode base tab of an outermost electrode plate of the electrode assembly is within a range of 7.5 mm to 8.5 mm.

8. The rechargeable battery as claimed in any one of claims 1 to 7, wherein
a width H2 of electrode base tabs of remaining electrode plates, excluding an electrode base tab of an outermost electrode plate of the electrode assembly, is within a range of 8.5 mm to 9.5 mm.

9. The rechargeable battery as claimed in any one of claims 1 to 8, wherein
a boundary between the electrode base tab and an electrode current collector in an outermost electrode plate among the plurality of electrode plates is rounded, optionally wherein
a radius R of rounded portions of the electrode base tab and the electrode current collector is within a range of 0.5 mm to 2.0 mm.

10. The rechargeable battery as claimed in any one of claims 2 to 9, wherein
a first electrode plate comprises a first electrode current collector onto which a first electrode active material is applied,
a first electrode base tab is formed integrally with the first electrode current collector and extends outwardly from a portion of the first electrode plate,
a second electrode plate comprises a second electrode current collector onto which a second electrode active material is applied,
and a second electrode base tab is formed integrally with the second electrode current collector and extends outwardly from a portion of the second electrode plate.

11. A rechargeable battery, comprising:
an electrode assembly including a plurality of electrode plates, each electrode plate including an electrode base tab and disposed to be stacked on one another, and a separator interposed between the plurality of electrode plates, the plurality of electrode plates comprises a plurality of first electrode plates, each first electrode plate including a first electrode base tab, and a plurality of second electrode plates, each second electrode plate including a second electrode base tab, the first electrode tabs disposed to overlap with one another, and the second electrode tabs disposed to overlap with one another; and
a case accommodating the electrode assembly.

12. A method of making a rechargeable battery comprising:
providing an electrode assembly having a plurality of electrode plates, each electrode plate having an electrode base tab;
stacking the electrode plates on one another, with a width of a base tab of an outermost electrode plate being smaller than a width of a base tab of other electrode plates;
interposing a separator between stacked electrode plates;
providing a case accommodating the electrode assembly.

13. The method as claimed in claim 12, wherein the plurality of electrode plates includes a plurality of first electrode plates, each first electrode plate including a first electrode base tab, and a plurality of second electrode plates, each second electrode plate including a second electrode base tab, and wherein the electrode plates are stacked such that the first electrode base tabs overlap with one another and the second electrode base tabs overlap with one another.

14. The method as claimed in claim 13, wherein:
(i) the electrode plates are stacked such that a first electrode plate is positioned on upper and lower outmost sides of the electrode assembly; or
(ii) the electrode plates are stacked such that a second electrode plate is positioned on upper and lower outmost sides of the electrode assembly.

15. The method as claimed in claim 13 or claim 14, wherein the electrode plates are stacked such that an electrode base tab of an outermost electrode plate in the electrode assembly is positioned in an inner region of the electrode base tabs of remaining electrode plates.

## Patentansprüche

1. Aufladbare Batterie, die Folgendes umfasst:
eine Elektrodenanordnung, die eine Vielzahl von Elektrodenplatten einschließt, wobei jede Elektrodenplatte eine Elektrodenbasislasche einschließt und dazu angeordnet ist, übereinander gestapelt zu werden, und einen Separator, der zwischen der Vielzahl von Elektrodenplatten eingefügt ist; und
ein Gehäuse, das die Elektrodenanordnung aufnimmt,
wobei eine Breite der Elektrodenbasislasche einer äußersten Elektrodenplatte in der Elektrodenanordnung kleiner ist als eine Breite der Elektrodenbasislasche jeder der übrigen Elektrodenplatten, die miteinander verbunden sind.

2. Aufladbare Batterie nach Anspruch 1, wobei
die Vielzahl von Elektrodenplatten Folgendes umfasst:
eine Vielzahl von ersten Elektrodenplatten, wobei jede erste Elektrodenplatte eine erste Elektrodenbasislasche einschließt; und
eine Vielzahl von zweiten Elektrodenplatten, wobei jede zweite Elektrodenplatte eine zweite Elektrodenbasislasche einschließt.

3. Aufladbare Batterie nach Anspruch 2, wobei
die ersten Elektrodenbasislaschen ausgerichtet sind, um einander zu überlappen, und
die zweiten Elektrodenbasislaschen ausgerichtet sind, um einander zu überlappen.

4. Aufladbare Batterie nach Anspruch 2 oder Anspruch 3, wobei:
(i) eine erste Elektrodenplatte an oberen und unteren äußersten Seiten der Elektrodenanordnung positioniert ist;
(ii) eine zweite Elektrodenplatte an oberen und unteren äußersten Seiten der Elektrodenanordnung positioniert ist;
(iii) eine erste Elektrodenplatte an einer oberen äußersten Seite der Elektrodenanordnung positioniert ist und eine zweite Elektrodenplatte an einer unteren äußersten Seite der Elektrodenanordnung positioniert ist; oder
(iv) eine zweite Elektrodenplatte an einer oberen äußersten Seite der Elektrodenanordnung positioniert ist und eine erste Elektrodenplatte an einer unteren äußersten Seite der Elektrodenanordnung positioniert ist.

5. Aufladbare Batterie nach einem der Ansprüche 1 bis 4, wobei
eine Elektrodenbasislasche einer äußersten Elektrodenplatte in der Elektrodenanordnung in einer inneren Region der Elektrodenbasislaschen übriger Elektrodenplatten positioniert ist.

6. Aufladbare Batterie nach einem der Ansprüche 1 bis 5, wobei
eine Differenz D zwischen einem Ende in einer Breitenrichtung der Elektrodenbasislasche einer äußersten Elektrodenplatte in der Elektrodenanordnung und einem Ende in einer Breitenrichtung einer Elektrodenbasislasche übriger Elektrodenplatten in einem Bereich von 0,5 mm bis 2,0 mm liegt.

7. Aufladbare Batterie nach einem der Ansprüche 1 bis 6, wobei
eine Breite H1 einer Elektrodenbasislasche einer äußersten Elektrodenplatte der Elektrodenanordnung in einem Bereich von 7,5 mm bis 8,5 mm liegt.

8. Aufladbare Batterie nach einem der Ansprüche 1 bis 7, wobei
eine Breite H2 der Elektrodenbasislaschen übriger Elektrodenplatten, ausschließlich einer Elektrodenbasislasche einer äußersten Elektrodenplatte der Elektrodenanordnung, in einem Bereich von 8,5 mm bis 9,5 mm liegt.

9. Aufladbare Batterie nach einem der Ansprüche 1 bis 8, wobei
eine Grenze zwischen der Elektrodenbasislasche und einem Elektrodenstromkollektor in einer äußersten Elektrodenplatte unter der Vielzahl von Elektrodenplatten gerundet ist, wobei optional
ein Radius R der gerundeten Abschnitte der Elektrodenbasislasche und des Elektrodenstromkollektors in einem Bereich von 0,5 mm bis 2,0 mm liegt.

10. Aufladbare Batterie nach einem der Ansprüche 2 bis 9, wobei
eine erste Elektrodenplatte einen ersten Elektrodenstromkollektor umfasst, auf den ein erstes aktives Elektrodenmaterial aufgebracht ist,
eine erste Elektrodenbasislasche einstückig mit dem ersten Elektrodenstromkollektor gebildet ist und sich von einem Abschnitt der ersten Elektrodenplatte nach außen erstreckt,
eine zweite Elektrodenplatte einen zweiten Elektrodenstromkollektor umfasst, auf den ein zweites aktives Elektrodenmaterial aufgebracht ist,
eine zweite Elektrodenbasislasche einstückig mit dem zweiten Elektrodenstromkollektor gebildet ist und sich von einem Abschnitt der zweiten Elektrodenplatte nach außen erstreckt.

11. Aufladbare Batterie, die Folgendes umfasst:
eine Elektrodenanordnung, die eine Vielzahl von Elektrodenplatten einschließt, wobei jede Elektrodenplatte eine Elektrodenbasislasche einschließt und angeordnet ist, um übereinander gestapelt zu werden, und einen Separator, der zwischen der Vielzahl von Elektrodenplatten eingefügt ist, wobei die Vielzahl von Elektrodenplatten eine Vielzahl von ersten Elektrodenplatten umfasst, wobei jede erste Elektrodenplatte eine erste Elektrodenbasislasche einschließt, und eine Vielzahl von zweiten Elektrodenplatten, wobei jede zweite Elektrodenplatte eine zweite Elektrodenbasislasche einschließt, wobei die ersten Elektrodenlaschen angeordnet sind, um einander zu überlappen, und die zweiten Elektrodenlaschen angeordnet sind, um einander zu überlappen; und
ein Gehäuse, das die Elektrodenanordnung aufnimmt.

12. Verfahren zum Herstellen einer aufladbaren Batterie, das Folgendes umfasst:
Bereitstellen einer Elektrodenanordnung, die eine Vielzahl von Elektrodenplatten aufweist, wobei jede Elektrodenplatte eine Elektrodenbasislasche aufweist;
Stapeln der Elektrodenplatten aufeinander, mit einer Breite einer Basislasche einer äußersten Elektrodenplatte, die kleiner ist als eine Breite einer Basislasche von anderen Elektrodenplatten;
Einfügen eines Separators zwischen gestapelten Elektrodenplatten;
Bereitstellen eines Gehäuses, das die Elektrodenanordnung aufnimmt.

13. Verfahren nach Anspruch 12, wobei die Vielzahl von Elektrodenplatten eine Vielzahl von ersten Elektrodenplatten einschließt, wobei jede erste Elektrodenplatte eine erste Elektrodenbasislasche einschließt, und eine Vielzahl von zweiten Elektrodenplatten, wobei jede zweite Elektrodenplatte eine zweite Elektrodenbasislasche einschließt, und wobei die Elektrodenplatten derart gestapelt sind, dass die ersten Elektrodenbasislaschen einander überlappen und die zweiten Elektrodenbasislaschen einander überlappen.

14. Verfahren nach Anspruch 13, wobei:
(i) die Elektrodenplatten derart gestapelt sind, dass eine erste Elektrodenplatte an oberen und unteren äußersten Seiten der Elektrodenanordnung positioniert ist; oder
(ii) die Elektrodenplatten derart gestapelt sind, dass eine zweite Elektrodenplatte an oberen und unteren äußersten Seiten der Elektrodenanordnung positioniert ist.

15. Verfahren nach Anspruch 13 oder Anspruch 14, wobei die Elektrodenplatten derart gestapelt sind, dass eine Elektrodenbasislasche einer äußersten Elektrodenplatte in der Elektrodenanordnung in einer inneren Region der Elektrodenbasislaschen übriger Elektrodenplatten positioniert ist.

## Revendications

1. Batterie rechargeable, comprenant :
un ensemble électrode incluant une pluralité de plaques d'électrode, chaque plaque d'électrode incluant une languette de base d'électrode et disposées pour être empilées les unes sur les autres, et un séparateur intercalé entre la pluralité de plaques d'électrode ; et
un boîtier logeant l'ensemble électrode,
dans laquelle une largeur de la languette de base d'électrode d'une plaque d'électrode la plus à l'extérieur dans l'ensemble électrode est inférieure à une largeur de la languette de base d'électrode de chacune des plaques d'électrode restantes qui sont reliées les unes aux autres.

2. Batterie rechargeable selon la revendication 1, dans laquelle
la pluralité de plaques d'électrode comprend :
une pluralité de premières plaques d'électrode, chaque première plaque d'électrode incluant une première languette de base d'électrode ; et
une pluralité de secondes plaques d'électrode, chaque seconde plaque d'électrode incluant une seconde languette de base d'électrode.

3. Batterie rechargeable selon la revendication 2, dans laquelle
les premières languettes de base d'électrode sont alignées pour se chevaucher, et
les secondes languettes de base d'électrode sont alignées pour se chevaucher.

4. Batterie rechargeable selon la revendication 2 ou la revendication 3, dans laquelle
(i) une première plaque d'électrode est positionnée sur les côtés supérieur et inférieur les plus à l'extérieur de l'ensemble électrode ;
(ii) une seconde plaque d'électrode est positionnée sur les côtés supérieur et inférieur les plus à l'extérieur de l'ensemble électrode ;
(iii) une première plaque d'électrode est positionnée sur un côté supérieur le plus à l'extérieur de l'ensemble électrode, et une seconde plaque d'électrode est positionnée sur un côté inférieur le plus à l'extérieur de l'ensemble électrode ; ou
(iv) une seconde plaque d'électrode est positionnée sur un côté supérieur le plus à l'extérieur de l'ensemble électrode, et une première plaque d'électrode est positionnée sur un côté inférieur le plus à l'extérieur de l'ensemble électrode.

5. Batterie rechargeable selon l'une quelconque des revendications 1 à 4, dans laquelle
une languette de base d'électrode d'une plaque d'électrode la plus à l'extérieur dans l'ensemble électrode est positionnée dans une zone interne des languettes de base d'électrode des plaques d'électrode restantes.

6. Batterie rechargeable selon l'une quelconque des revendications 1 à 5, dans laquelle
une différence D entre une extrémité dans le sens de la largeur de la languette de base d'électrode d'une plaque d'électrode la plus à l'extérieur dans l'ensemble électrode et une extrémité dans le sens de la largeur d'une languette de base d'électrode des plaques d'électrode restantes se situe dans une plage allant de 0,5 mm à 2,0 mm.

7. Batterie rechargeable selon l'une quelconque des revendications 1 à 6, dans laquelle
une largeur H1 d'une languette de base d'électrode d'une plaque d'électrode la plus à l'extérieur de l'ensemble électrode se situe dans une plage allant de 7,5 mm à 8,5 mm.

8. Batterie rechargeable selon l'une quelconque des revendications 1 à 7, dans laquelle
une largeur H2 des languettes de base d'électrode des plaques d'électrode restantes, à l'exclusion d'une languette de base d'électrode d'une plaque d'électrode la plus à l'extérieur de l'ensemble électrode, se situe dans une plage allant de 8,5 mm à 9,5 mm.

9. Batterie rechargeable selon l'une quelconque des revendications 1 à 8, dans laquelle
une limite entre la languette de base d'électrode et un collecteur de courant d'électrode dans une plaque d'électrode la plus à l'extérieur parmi la pluralité de plaques d'électrode est arrondie, facultativement dans laquelle
un rayon R de parties arrondies de la languette de base d'électrode et du collecteur de courant d'électrode se situe dans une plage allant de 0,5 mm à 2,0 mm.

10. Batterie rechargeable selon l'une quelconque des revendications 2 à 9, dans laquelle
une première plaque d'électrode comprend un premier collecteur de courant d'électrode sur lequel un premier matériau actif d'électrode est appliqué,
une première languette de base d'électrode est formée d'un seul tenant avec le premier collecteur de courant d'électrode et s'étend vers l'extérieur depuis une partie de la première plaque d'électrode,
une seconde plaque d'électrode comprend un second collecteur de courant d'électrode sur lequel un second matériau actif d'électrode est appliqué,
et une seconde languette de base d'électrode est formée d'un seul tenant avec le second collecteur de courant d'électrode et s'étend vers l'extérieur depuis une partie de la seconde plaque d'électrode.

11. Batterie rechargeable, comprenant :
un ensemble électrode incluant une pluralité de plaques d'électrode, chaque plaque d'électrode incluant une languette de base d'électrode et disposées pour être empilées les unes sur les autres, et un séparateur intercalé entre la pluralité de plaques d'électrode, la pluralité de plaques d'électrode comprend une pluralité de premières plaques d'électrode, chaque première plaque d'électrode incluant une première languette de base d'électrode, et une pluralité de secondes plaques d'électrode, chaque seconde plaque d'électrode incluant une seconde languette de base d'électrode, les premières languettes d'électrode étant disposées de manière à se chevaucher, et les secondes languettes d'électrode disposées de manière à se chevaucher ; et
un boîtier logeant l'ensemble électrode.

12. Procédé de fabrication d'une batterie rechargeable comprenant :
la fourniture d'un ensemble électrode présentant une pluralité de plaques d'électrode, chaque plaque d'électrode présentant une languette de base d'électrode ;
l'empilement des plaques d'électrode les unes sur les autres, avec une largeur d'une languette de base d'une plaque d'électrode la plus à l'extérieur qui est inférieure à une largeur d'une languette de base d'autres plaques d'électrode ;
l'interposition d'un séparateur entre des plaques d'électrode empilées ;
la fourniture d'un boîtier logeant l'ensemble électrode.

13. Procédé selon la revendication 12, dans lequel la pluralité de plaques d'électrode inclut une pluralité de premières plaques d'électrode, chaque première plaque d'électrode incluant une première languette de base d'électrode, et une pluralité de secondes plaques d'électrode, chaque seconde plaque d'électrode incluant une seconde languette de base d'électrode, et dans lequel les plaques d'électrode sont empilées de telle sorte que les premières languettes de base d'électrode se chevauchent et que les secondes languettes de base d'électrode se chevauchent.

14. Procédé selon la revendication 13, dans lequel :
(i) les plaques d'électrode sont empilées de telle sorte qu'une première plaque d'électrode soit positionnée sur les côtés supérieur et inférieur les plus à l'extérieur de l'ensemble électrode ; ou
(ii) les plaques d'électrode sont empilées de telle sorte qu'une seconde plaque d'électrode soit positionnée sur les côtés supérieur et inférieur les plus à l'extérieur de l'ensemble électrode.

15. Procédé selon la revendication 13 ou la revendication 14, dans lequel les plaques d'électrode sont empilées de telle sorte qu'une languette de base d'électrode d'une plaque d'électrode la plus à l'extérieur de l'ensemble électrode soit positionnée dans une zone interne des languettes de base d'électrode des plaques d'électrode restantes.
